# EUROPÄISCHE PATENTANMELDUNG

(11) **EP 1 717 937 A2**
(43) Veröffentlichungstag der Anmeldung: **02.11.2006**
(21) Anmeldenummer: 06008059.5
(22) Anmeldetag: 19.04.2006
(51) Int. Cl.: H02M 3/00, H02J 7/14

(54) **Stromversorgungsvorrichtung, insbesondere für ein Kraftfahrzeug**

(30) Priorität: 29.04.2005 DE 102005020031
(71) Anmelder: Icemaster GmbH Generatoren und Kältetechnik, 33104 Paderborn (DE)
(72) Erfinder: Mertens, Jürgen, 33104 Paderborn (DE)
(74) Vertreter: Hanewinkel, Lorenz

(57) **Zusammenfassung**

Die Erfindung betrifft eine Stromversorgungsvorrichtung, insbesondere für ein Kraftfahrzeug, mit einem Fahrzeug-Verbrennungsmotor (FM), der einen ersten Drehstromgenerator (DG1) antreibt, und einen Versorgungs-Verbrennungsmotor (VM), der einen zweiten Drehstromgenerator (DG2) antreibt, wobei ein Umschalter (BS) gesteuert den jeweils in Betrieb befindlichen Drehstromgenerator (DG1, DG2) mit einem ersten Spannungskonverter (K1) verbindet, dem ein zweiter Konverter (K2) nachgeschaltet ist, dessen Ausgangsspannung (UB) Niedervoltverbraucher (V) und eine Akkumulatorbatterie (AB) speist, wobei der erste Spannungskonverter (K1) ein mehrphasen-hochfrequenz-pulslängengeregelter Gleichspannungserzeuger mit Festkörper-Schaltelementen (MOS) ist, der eine Zwischen-Gleichspannung (UG) erzeugt, aus der der zweite Spannungskonverter (K2), der hochfrequenz-pulslängengeregelter Gleichspannungssteller mit einem Festkörper-Schaltelement (MOS1) ist, die Niedervolt-Ausgangsspannung (UB) erzeugt.

## Beschreibung

Die Erfindung betrifft eine Stromversorgungsvorrichtung, insbesondere für ein Kraftfahrzeug, mit einem Fahrzeug-Verbrennungsmotor, der einen ersten Drehstromgenerator antreibt, und einem Versorgurigs-Verbrennungmotor, der einen zweiten Drehstromgenerator antreibt, wobei ein Umschalter gesteuert den jeweils in Betrieb befindlichen Drehstromgenerator mit einem ersten geregelten Spannungskonverter verbindet, dem ein zweiter Konverter nachgeschaltet ist, dessen Ausgangsspannung Niedervoltverbraucher und eine Akkumulatorbatterie speist.

Eine derartige Stromversorgungsvorrichtung ist aus der DE 198 04 693 A1 bekannt. Bei dieser besteht der erste Konverter, der von dem Drehstrom gespeist wird, aus einem Dreiphasen-Transduktor, der eine Dreiphasen-Spannungsregelung über einen hohen Spannungs- und Frequenzbereich erbringt, der sich aus der üblicherweise wechselnden Drehzahl des Fahrzeugmotors ergibt. Ein solcher Transduktor hat ein hohes Gewicht und einen erheblichen Raumbedarf und benötigt Wärmeabführmittel, da er beachtliche Kupfer- und Eisenverluste hat. Dem Transduktor war ein Transformator von einer stabilisierten Zwischen-Wechselspannung auf eine Kleinspannung nachgeschaltet, der ebenfalls Eisen- und Kupferverluste aufweist und erheblichen Raumbedarf und hohes Gewicht hat. Der zweite Drehstromgenerator war, wie üblich, mit einer Feldwicklung versehen, die ebenfalls Verluste erbringt und Baugröße erfordert.

Weiterhin ist aus der Schrift DE 196 28 223 A1 bekannt, aus mehreren Generatoren über mehrere Spannungskonverter mehrere Gleichspannungen unterschiedlicher Spannungshöhe zu erzeugen. Diese Gleichspannungen dienen unter anderem dazu, wenigstens zwei Batterien mit unterschiedlicher Netzspannung zu laden. Diese mehrfache Batterie bedingt einen hohen Aufwand.

Es ist Aufgabe der Erfindung, die erstgenannte Stromversorgungsvorrichtung wesentlich kleiner und verlustärmer zu gestalten.

Die Lösung besteht darin, dass der erste Spannungskonverter eine Zwischen-Gleichspannung erzeugt, aus der der zweite Spannungskonverter die Niedervolt-Ausgangsspannung erzeugt.

Vorteilhafte Ausgestaltungen sind in den Unteransprüchen angegeben.

Der Einsatz von Konvertern mit Festkörperschaltern, die im hochfrequentierten Puls-Pausen-Betrieb gesteuert werden, reduziert den Raumbedarf, das Gewicht und die Verlustleistung ganz erheblich. Zudem dient der erste Konverter als Mehrphasengleichrichter, wodurch die Zwischenspannung als eine Gleichspannung bereitgestellt wird, so dass der zweite Konverter als einfacher Gleichstrom-Gleichstromwandler ausgebildet werden kann.

Die beiden Konverter sind vorzugsweise mit schnell schaltenden, verlustarmen Leistungs-MOS-FET-Transistoren bestückt, die mit Siebinduktoren in Serie geschaltet sind. Da die Schaltfrequenz der Reglersteuerspannung beispielsweise 20 kHz beträgt, sind diese Siebdrosseln relativ klein gehalten. Sie sind mit schnellen Freilaufdioden beschaltet, so dass auch in den Schaltpausen Strom nachgeliefert wird. Die Steuerimpulse werden phasengerecht geliefert, so dass die Gleichrichtung bewirkt wird.

Einen großen Vorteil hat der mit einem Permanent-Magnetfeld versehene Generator, der klein baut und keine Feldspulenverluste hat. Er wird am Strombedarf orientiert vom Versorgungsmotor drehzahlmäßig gesteuert betrieben, wobei die Drehzahl stets so hoch gewählt wird, dass der erste Konverter eine zum jeweiligen Stromverbrauch passende Oberspannung über der Zwischenspannung erhält und dadurch äußerst verlustarm arbeitet. Die Regler sind vorzugsweise mittels eines Mikroprozessors realisiert.

Der Verbraucherstrom wird laufend gemessen, wenn der Fahrzeugmotor still steht und der zweite Drehstrom-Generator zugeschaltet ist. Bei hohem Strombedarf und geringer Akkumulatorladung wird durch einen Starterstrom der Versorgungsmotor, der bevorzugt ein Dieselmotor ist, eingeschaltet und dann drehzahlgesteuert betrieben.

Das gesamte elektrische Aggregat mit den beiden Konvertern und den Spannungs- und Drehzahlreglern ist vorteilhaft in einem Gehäuse untergebracht.

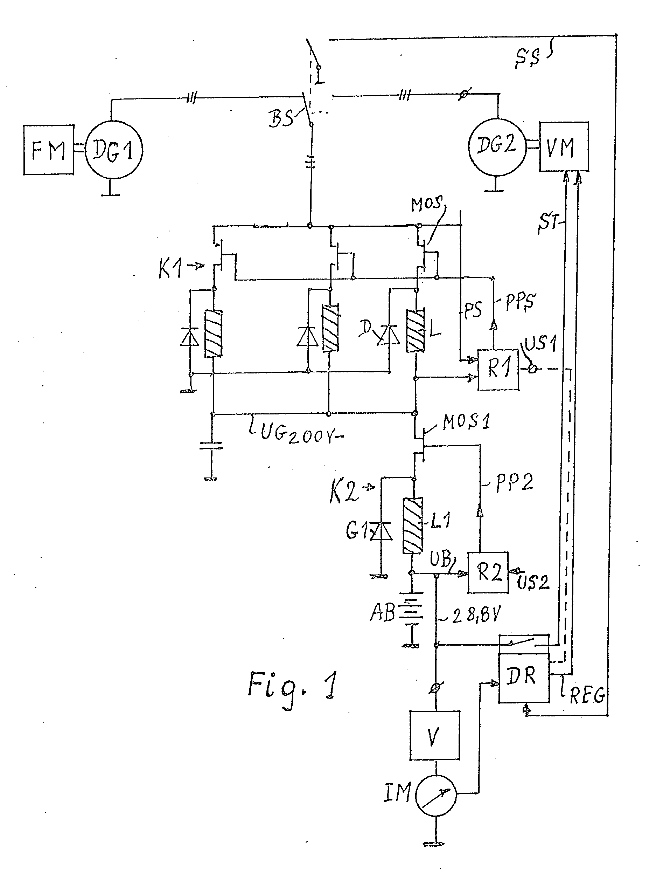

Eine vorteilhafte Ausgestaltung zeigt Fig. 1.

In Fig. 1 ist eine Stromversorgungsvorrichtung dargestellt, die zum einen von einem ersten Drehstromgenerator DG1 mit einem Fahrzeugmotor FM und zum anderen bei umgelegtem Betriebsschalter BS von einem zweiten Drehstromgenerator DG2 mit einem Versorgungsmotor VM gespeist wird. Die drei Phasen werden von dem Betriebsschalter BS an einen ersten Konverter K1 geliefert. Dieser enthält für die drei Phasen oder, je nach Ausführung auch für sechs Phasen-MOS-FET-Leistungsschalter MOS. Diesen sind Siebdrosseln L in Reihe geschaltet, die ausgangsseitig zusammengeschaltet eine Zwischengleichspannung UG liefern. Die Drosseln L sind mit Freilaufdioden D beschaltet. Die MOS-FET-Schalter MOS werden mittels eines Phasensignals PS phasenrichtig mit einer Frequenz von etwa 20 kHz getaktet angesteuert, wobei das jeweilige Puls-Pausenverhältnis von einem gruppenersten Reglersignal PPS bestimmt wird. Der erste Regler R1 vergleicht die Zwischengleichspannung UG mit einer vorgegebenen ersten Sollspannung US 1, die zwischen 150 und 250V zweckmäßig liegt und vorzugsweise 220V beträgt. So wird die bis zu 800V Spitzenspannung betragende Generatorspannung UG auf diese niedrigere Spannung UG umgesetzt. Die Zwischengleichspannung UG ist zweckmäßig mit einem Siebkondensator gestützt.

Die Generatorspannung der ersten Generators DG1 schwankt abhängig von der jeweiligen Motordrehzahl, die durch den Fahrzeugbetrieb vorgegeben ist in einem großen Bereich ebenso wie die Generatorfrequenz.

Der zweite Generator DG2 wird auch bei unterschiedlicher Drehzahl betrieben; die Drehzahl wird jedoch bedarfsgerecht vom Stromverbrauch abhängig gesteuert. Der Stromverbrauch wird mit einem Strommeßgerät IM am Verbraucher V gemessen und so an einen Drehzahlregler DR gemeldet, der die Speisung des Versorgungsmotors VM mit einem Drehzahlreglersignal REG steuert.

Abhängig von einem Schalterstellungssignal SS des Betriebsumschalters BS schaltet der Drehzahlregler DR einen Starterstrom ST zum Anlasser des Versorgungsmotors VM, wenn ein Strombedarf gemeldet wird, der von einem Akkumulator AB nur noch für eine geringe Zeit gedeckt werden kann.

Die Akkumulatorbatterie AB wird mittels eines zweiten Spannungskonverters K2 mit einer aus der Zwischengleichspannung UG genommenen Batterieladespannung UB geladen, die auch den Verbrauchern V zugeführt wird. Vorzugsweise hat der Akkumulator eine Nennspannung von 24V und die Batterieladespannung beträgt passend dazu 28,8V. Diese Ladespannung UB wird mittels eines zweiten Spannungsreglers R2 durch eine zweite Sollspannung US2 von 28,8V erzeugt, indem ein dazu passendes 2. Puls-Pausensignal PP2 einem MOS-FET-Schalter MOS1 im zweiten Konverter K2 zugeführt wird. Der MOS-FET-Transistor MOS1 speist über eine Siebdrossel L1 den Akkumulator AB. Die Siebdrossel L1 ist mit einer Freilaufdiode GL beschaltet.

Wenn im Versorgungsbetrieb nur ein mittlerer Strombedarf besteht, wird in einer weiteren Ausgestaltung auch die Zwischengleichspannung UG durch eine verbraucherabhängige Vorgabe der ersten Sollspannung US1 abgesenkt, so dass die Gesamtverluste der beiden Konverter jeweils minimiert sind, wie die gestrichelte Verbindung vom Drehzahlregler DR zum ersten Spannungsregler R1 versinnbildlicht.

Je nach der Leistungsauslegung der Gesamtvorrichtung und den jeweils verfügbaren Festkörperbauteilen sind die Konverter mit parallelen Schaltstrecken auszuführen, die vorzugsweise mit gegeneinander phasenversetzten Puls-Steuersignalen betrieben werden, so dass ein weitgehend stufenfreier Strom fließt und nur geringe Störungen auftreten und abgestrahlt sowie an die Verbraucher geleitet werden. Restwelligkeiten sind durch übliche Siebmittel von den Gleichspannungen UG, UB zu beseitigen, die wegen der hohen Taktfrequenz relativ klein zu dimensionieren sind.

### Bezugszeichenliste

- AB: Akkumulatorbatterie
- BS: Betriebsschalter
- D: Diode
- DG1: 1. Drehstromgenerator
- DG2: 2. Drehstromgenerator
- DR: Drehzahlregler
- FM: Fahrzeugmotor
- L: Siebdrossel
- L1: Siebdrossel
- D1: Drossel
- G1: Gleichrichter
- IM: Strommesser
- K1: 1. Konverter
- K2: 2. Konverter
- MOS, MOS1: MOS-FET-Transitoren
- PP1, PP2: Puls-Pausensignale 1 und 2
- PS: Phasensignal
- R1, R2: 1. und 2. Spannungsregler
- REG: Drehzahlreglersignal
- ST: Startersignal
- SS: Schalterstellungssignal
- UG: Zwischen-Gleichspannung
- UB: Batteriespannung
- US1, US2: 1. und 2. Sollspannung
- V: Niedervoltverbraucher
- VM: Versorgungsmotor

## Patentansprüche

1. Stromversorgungsvorrichtung, insbesondere für ein Kraftfahrzeug, mit einem Fahrzeug-Verbrennungsmotor (FM), der einen ersten Drehstromgenerator (DG1) antreibt, und einen Versorgungs-Verbrennungsmotor (VM), der einen zweiten Drehstromgenerator (DG2) antreibt, wobei ein Umschalter (BS) gesteuert den jeweils in Betrieb befindlichen Drehstromgenerator (DG1, DG2) mit einem ersten Spannungskonverter (K1) verbindet, dem ein zweiter Konverter (K2) nachgeschaltet ist, dessen Ausgangsspannung (UB) Niedervoltverbraucher (V) und eine Akkumulatorbatterie (AB) speist,
**dadurch gekennzeichnet, dass** der erste Spannungskonverter (K1) eine Zwischen-Gleichspannung (UG) von etwa 200V erzeugt, aus der der zweite Spannungskonverter (K2) die Niedervolt-Ausgangsspannung (UB) erzeugt.

2. Stromversorgungsvorrichtung nach Anspruch 1, **dadurch gekennzeichnet, dass** der erste Spannungskonverter (K1) ein mehrphasen-hochfrequenz-pulslängengeregelter Gleichspannungserzeuger mit Festkörper-Schaltelementen (MOS) ist.

3. Stromversorgungsvorrichtung nach Anspruch 1, **dadurch gekennzeichnet, dass** der zweite Spannungskonverter (K2) ein hochfrequenz-pulslängengeregelter Gleichspannungssteller mit einem Festkörper-Schaltelement (MOS1) ist.

4. Stromversorgungsvorrichtung nach Anspruch 2 oder 3, **dadurch gekennzeichnet, dass** die Zwischen-Gleichspannung (UG), als eine Ist-Spannung, einem ersten Spannungsregler (R1) zugeführt ist, dem außerdem eine erste Sollspannung (US1) und ein Phasensignal (PS) von der Generatorspannung zugeführt sind und dessen Ausgang erste hochfrequente Puls-Pausen-Steuersignale (PPS) phasenrichtig an die Festkörperschaltelemente (MOS) liefert.

5. Stromversorgungsvorrichtung nach Anspruch 4, **dadurch gekennzeichnet, dass** die erste Sollspannung (US1) zwischen 150V und 250V vorgegeben ist.

6. Stromversorgungsvorrichtung nach Anspruch 4, **dadurch gekennzeichnet, dass** die Festkörperschaltelemente (MOS) MOS-FET-Transistoren sind, die als ein Mehrphasengleichrichter zusammengeschaltet und angesteuert sind und jeweils mit einer Siebdrossel (L) und mit einer Freilaufdiode (D) beschaltet sind, und die Zwischengleichspannung (UG) mit einem Kondensator gestützt ist.

7. Stromversorgungsvorrichtung nach einem der vorstehenden Ansprüche, **dadurch gekennzeichnet, dass** die Niedervolt-Ausgangsspannung (UB) als eine Ist-Spannung einem zweiten Spannungsregler (R2) zugeführt ist, dem eine zweite Soll-Spannung (US2) zugeführt ist und dessen Ausgang zweite Puls-Pausen-Steuersignale (PP2) dem Festkörperschaltelement (MOS1) zuführt.;

8. Stromversorgungsvorrichtung nach Anspruch 7, **dadurch gekennzeichnet, dass** die zweite Soll-Spannung (US2) 28,8V beträgt und die Akkumulatorbatterie (AB) eine Nennspannung von 24V hat.

9. Stromversorgungsvorrichtung nach Anspruch 7, **dadurch gekennzeichnet, dass** das zweite Festkörperschaltelement (MOS1) ein MOS-FET-Transistor ist, der mit einer Siebdrossel (L1) in Serie geschaltet ist, die mit einer Freilaufdiode (G1) beschaltet ist.

10. Stromversorgungsvorrichtung nach einem der vorstehenden Ansprüche, **dadurch gekennzeichnet, dass** der zweite Drehstromgenerator (DG2) ein Permanentmagnetfeld aufweist und der zugehörige Versorgungsmotor (VM) ein drehzahlgesteuerter Dieselmotor ist und die Verbraucher (V) an die Akkumulatorbatterie (AB) über einen Strommesser (IM) angeschlossen sind, dessen Strommeßsignal einem Drehzahlregler (DR) zugeführt ist, der die Drehzahl des Versorgungsmotors (VM) lastabhängig regelt, so dass der Konverter (K1) einen minimalen Verlust erbringt.

11. Stromversorgungsvorrichtung nach Anspruch 10, **dadurch gekennzeichnet, dass** dem Drehzahlregler (DR) ein Schalterstellungssignal (SS) zugeführt ist, das jeweils signalisiert, wenn der Umschalter (BS) den zweiten Drehstromgenerator (DG2) zugeschaltet hat, und jeweils dann, wenn der laufende Stromverbrauch nur noch für eine beschränkte Zeit aus der Akkumulatorbatterie (AB) geliefert werden kann, der Drehzahlregler (DR) dem Versorgungsmotor (VM) einen Starterstrom (ST) von der Akkumulatorbatterie (AB) liefert, bis dieser angelaufen ist.

12. Stromversorgungsvorrichtung nach Anspruch 11, **dadurch gekennzeichnet**, das der Drehzahlregler (DR) und die Spannungsregler (R1, R2) von mindestens einem Mikroprozessor gebildet sind.

13. Stromversorgungsvorrichtung nach Anspruch 10, **dadurch gekennzeichnet, dass** der Drehzahlregler (DR) an den ersten Spannungsregler (R1) eine erste Sollspannung (US1) liefert, die derart drehzahlabhängig geführt ist, dass die summarischen Gesamtverluste der beiden Konverter (K1, K2) jeweils minimal sind.

14. Stromversorgungsvorrichtung nach einem der vorstehenden Ansprüche, **dadurch gekennzeichnet, dass** mehrere zweite Konverter modular parallel anschließbar sind.

15. Stromversorgungsvorrichtung nach einem der vorstehenden Ansprüche, **dadurch gekennzeichnet, dass** die Konverter (K1, K2) und die Regler (DR, R1, R2) zu einem austauschbaren Aggregat zusammengefasst montiert sind.
